# NEUE EUROPÄISCHE PATENTSCHRIFT

(11) **EP 0 562 545 B2**
(45) Veröffentlichungstag und Bekanntmachung des Hinweises auf die Entscheidung über den Einspruch: **07.01.1999**
(45) Hinweis auf die Patenterteilung: 28.02.1996
(21) Anmeldenummer: 93104747.6
(22) Anmeldetag: 23.03.1993
(51) Int. Cl.: F24D 3/14

(54) **Vorrichtung zum Temperieren von an eine Fassade grenzenden Räumen eines Gebäudes**
Temperature control device for rooms in a building which border on a facade
Dispositif pour régler la température de locaux d'un immeuble qui touchent à une façade

(30) Priorität: 25.03.1992 DE 4209702
(43) Veröffentlichungstag der Anmeldung: 29.09.1993
(73) Patentinhaber: SCHÜCO International KG, 33609 Bielefeld (DE)
(72) Erfinder: Ueckermann, Horst, D-4902 Bad Salzuflen 1 (DE); Pallmig, Dieter, D-4800 Bielefeld 15 (DE)
(74) Vertreter: Stracke, Alexander, Dipl.-Ing.

(56) Entgegenhaltungen:
- EP-A- 0 193 810
- DE-A- 1 810 493
- DE-A- 3 212 649
- DE-A- 3 604 326
- DE-A- 3 608 071
- DE-A- 3 818 362
- DE-U- 8 203 733
- DE-U- 8 660 018

## Beschreibung

Die Erfindung bezieht sich auf eine Fassade zur Außenbegrenzung von Räumen eines Gebäudes, bestehend aus einem von Pfosten- und Riegelprofilen gebildeten Rahmenwerk und aus die Rahmenfelder ausfüllenden Rahmenelementen mit einer Vorrichtung zum Temperieren der genannten Räume.

Es ist eine Fassade dieser Art bekannt (EP-A-0 193 810), bei der eine durch den hohlen Innenraum der Stützen und Riegel sich erstreckende, das Heizmedium führende Rohrleitung vorgesehen ist. Mit der Rohrleitung ist ein Wärmeübertragungsprofil über ein Wärmeleitkontaktelement verbunden. Das Wärmeübertragungsprofil nimmt in einer Halbschale die Rohrleitung auf, die über Wärmeleitstege mit der Innenwand des Wärmeübertragungsprofils verbunden ist. Das Wärmeübertragungsprofil mit der die Rohrleitung aufnehmenden Halbschale erstreckt sich über die gesamte Länge des Stütz-bzw. des Riegelprofils und bildet somit ein Bauteil dieser Fassaden profile, das vom Fassadenbauer erstellt und an der Baustelle in die Fassadenkonstruktion eingearbeitet werden muß. Gleichzeitig mit dem Fassadenbauer muß der Heizungsbauer tätig werden, der die das Heizmedium führende Rohrleitung in die genannten Halbschalen einlegen und befestigen sowie die Übergänge zwischen den Stütz- und Riegelprofilen erstellen muß. Diese Arbeiten sind mit den entsprechenden Werkzeugen durchzuführen.

Der Erfindung liegt die Aufgabe zugrunde, eine Fassade der eingangs genannten Art so zu gestalten, daß die Metallarbeiten bei der Erstellung der Fassade unabhängig von den Verlegungsarbeiten der das Heizmedium führenden Rohrleitung vorgenommen werden können, die Heizrohre nachrüstbar sind, Ausklinkungen an der Fassade entfallen und die Verwendung von im Heizungsbau bekannten Elementen möglich ist.

Diese Aufgabe wird durch die Merkmale des Patentanspruches 1 gelöst.

Das Festlegen der Rohre in den Haltern und das Befestigen der Halter an den Fassadenprofilen oder an den Zusatzprofilen und die Festlegung der Abdeckkappen an den Fassadenprofilen oder an den Zusatzprofilen erfolgt erfindungsgemäß durch Rastverbindungen, also ohne Einsatz von Werkzeugen.

Durch die Halter sind die ein Heizmedium führenden Rohre an dem jeweiligen sich aus der Konstruktion ergebenden Punkt an der Fassade festgelegt, so daß Winkel- und T-Abgänge im Boden-, Riegel- und Deckenbereich mit den herkömmlichen Mitteln des Heizungsbaus ausgeführt werden können. Gerade T- und Eckanschlüsse weisen z.T. größere Durchmesser als die Rohre selbst auf, so daß bei den nach dem Stand der Technik bekannten Lösungen aufwendige Klink- und Ausnehmungsarbeiten an den entsprechenden Fassadenprofilen vorgenommen werden müssen.

Bei der erfindungsgemäßen Lösung ist sichergestellt, daß der Heizungsbauer keine Metallarbeiten ausführen muß und daß der Metallbauer sich nicht mit den Problemen des Heizungsbaus zu befassen hat.

Ausgestaltungen der Erfindung ergeben sich aus den Unteransprüchen.

Ausführungsbeispiele der Erfindung sind in den Zeichnungen dargestellt und werden im folgenden beschrieben. Es zeigen:
- Fig. 1: einen Pfosten bzw. einen Riegel einer Fassade im Schnitt,
- Fig. 2 und 3: das Fassadenprofil nach der Fig. 1, das mit einem Aufsatzprofil nachgerüstet ist, an dem ein Heizmedium führende Rohre befestigt sind,
- Fig. 4 und 5: ein Fassadenprofil, das mit Verankerungsnuten für Heizrohre ausgestattet ist,
- Fig. 6 und 7: ein Fassadenprofil, das an der dem zu temperierenden Innenraum zugewandten Seite mit einem von den Fig. 4 und 5 abweichenden Bild von Verankerungsnuten für die Heizrohre ausgestattet ist, und
- Fig. 8: ein an einem Fassadenprofil festgelegtes Heizrohr, das mit einem Wärmetauschprofil ausgerüstet ist, und
- Fig. 9: ein weiteres mit ein Heizmedium führenden Rohren versehenes Fassadenprofil.

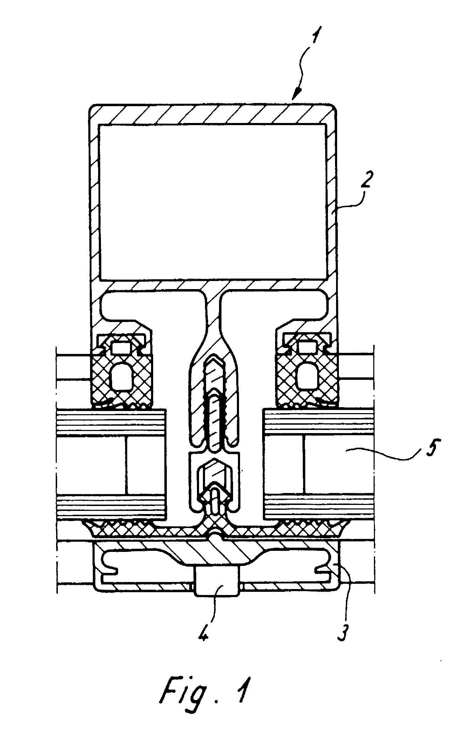

Der in der Fig. 1 aufgezeigte Pfosten oder Riegel besteht aus einem Fassadenprofil 2 und einem Abdeckprofil 3, das mittels Schrauben 4 an dem Fassadenprofil befestigt ist. Von dem Fassadenprofil und dem Abdeckprofil werden die Ränder von Isolierglasscheiben 5 aufgenommen, die die von den Pfosten und Riegeln gebildeten Rahmenfelder ausfüllen.

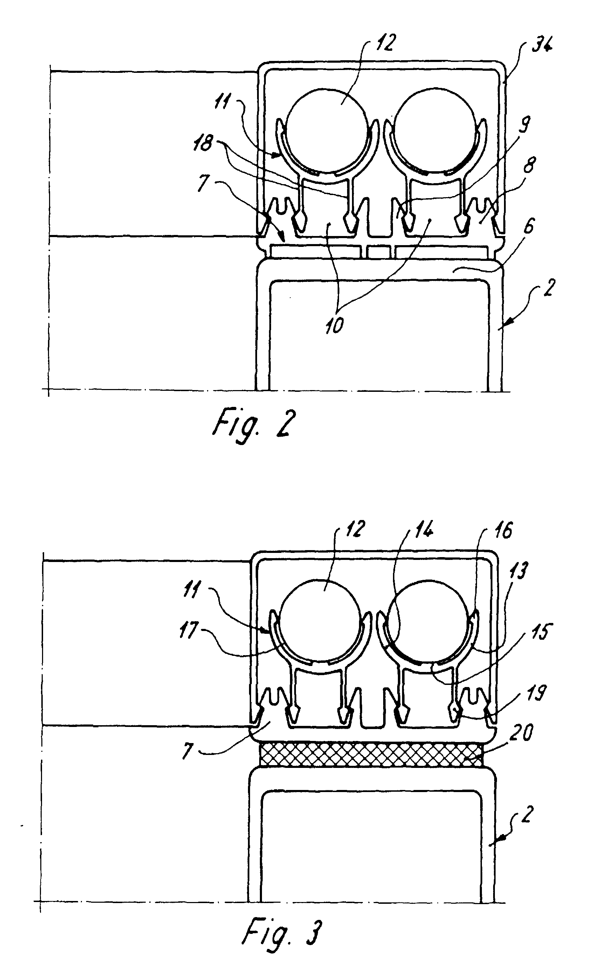

Das Fassadenprofil 2 nach der Fig. 1 kann entsprechend den Ausführungsbeispielen nach den Fig. 2 und 3 mit einer Vorrichtung zum Temperieren eines an die Fassade grenzenden Gebäuderaumes ausgerüstet oder nachgerüstet werden.

Bei den Ausführungsbeispielen nach den Fig. 2 und 3 ist an der dem Innenraum zugewandten Seite 6 des Fassadenprofils 2 ein Aufsatzprofil 7 befestigt, das mittels Schrauben oder Rastmittel mit dem Fassadenprofil 2 verbunden werden kann.

Dieses Aufsatzprofil 7 weist Nutstege 8 und 9 auf, die Verankerungsnuten 10 begrenzen, in denen in den dargestellten Ausführungsbeispielen die Befestigungsfüße von Haltern 11 festgelegt sind. Durch die Halter 11 werden die ein Heizmedium führenden Rohre 12 an dem Aufsatzprofil 7 und damit am Fassadenprofil 2 fixiert. Die Halter werden über die Rohrlänge verteilt angeordnet. Sie können an einer beliebigen Stelle der Verankerungsnut festgelegt werden.

Die Halter in den in den Zeichnungen dargestellten Ausführungsbeispielen weisen Klemmschenkel 13,14 auf, die der Außenkontur des Rohres 12 angepaßt sind und eine Aufnahme für das Rohr bilden. Die Klemmschenkel erstrecken sich über einen Winkelbereich, der größer als 180° ist. Im Sohlenbereich der Klemmschenkel ist eine Stützleiste 15 für das Rohr 12 vorgesehen und an den Schenkelenden sind Endstücke 16 angebracht, die im Ausführungsbeispiel dreieckförmig im Querschnitt ausgebildet sind und von den Klemmschenkeln nach innen vorspringen, so daß zwischen dem Klemmschenkel und dem Rohr 12 im Bereich zwischen der Stützleiste 15 und dem Endstück 16 ein Spaltraum 17 vorgesehen ist.

Die Halter werden vorzugsweise aus Kunststoff gefertigt und besitzen einen Befestigungsfuß, der bei den Ausführungsbeispielen nach den Fig. 2,3,6,7 und 8 aus zwei in Abstand voneinander angeordneten, parallel sich erstrekkenden Klemmstegen 18 besteht. Die Klemmstege 18 weisen am freien Ende ein pfeilförmiges Endstück 19 auf.

Dieses pfeilförmige Endstück 19 hintergreift an den Nutstegen 8,9 eine Rastkante, so daß aufgrund der Form- und Materialfederung des Befestigungsfußes die Klemmstege mit ihrem pfeilförmigen Endstück form- und kraftschlüssig an den Nutstegen 8,9 anliegen.

Während bei der Ausführungsform nach der Fig. 2 das Aufsatzprofil 7 unmittelbar sich an den Fassadenprofil 2 abstützt, ist bei der Konstruktion nach der Fig. 3 zwischen dem Aufsatzprofil 7 und dem Fassadenprofil eine Wärmedämmschicht 20 vorgesehen.

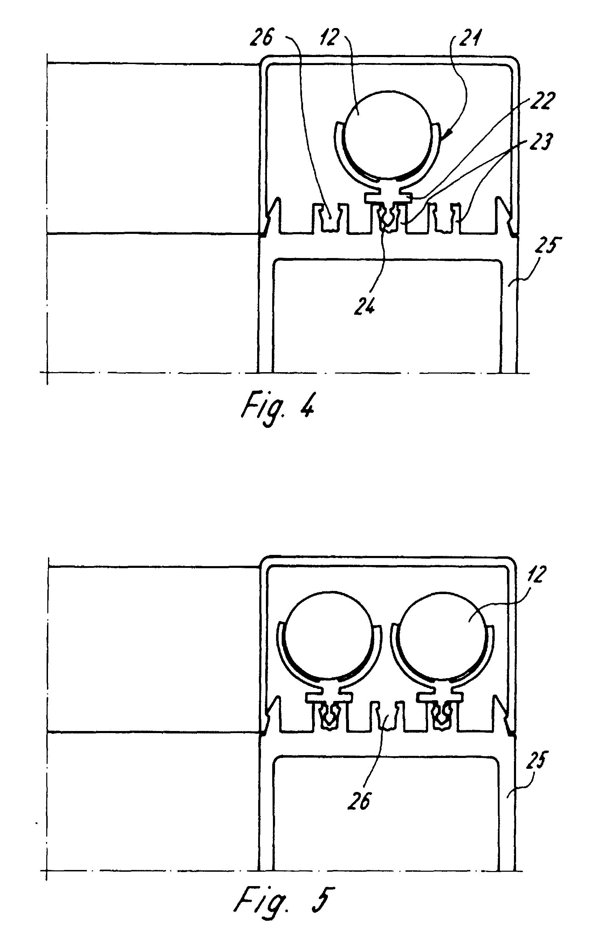

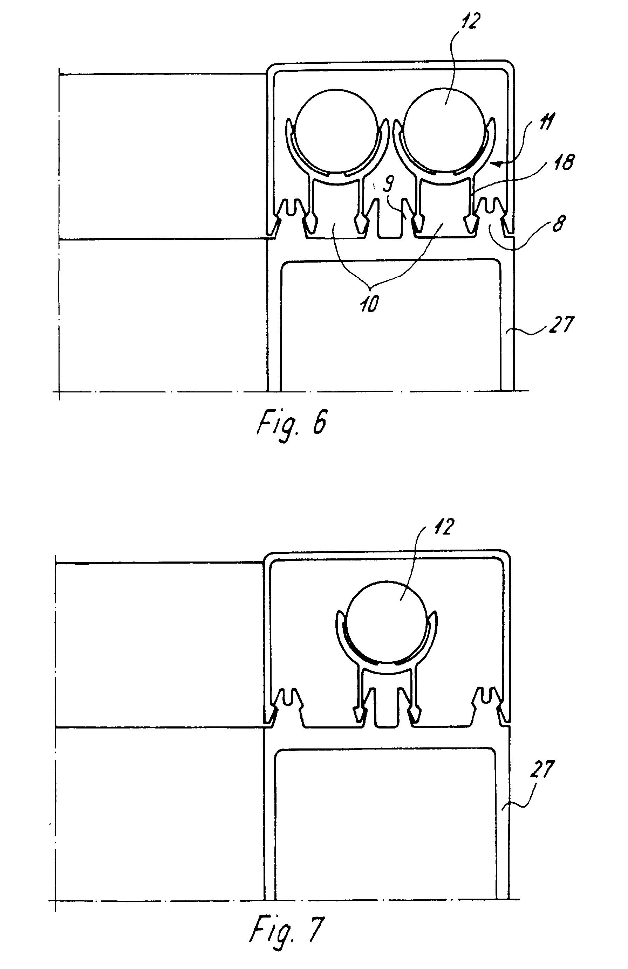

In den Fig. 4 und 5 sind Halter 21 zur Aufnahme und Festlegung der Rohre 12 dargestellt, bei denen die Ausbildung des Befestigungsfußes von den Haltern 11 abweichend ist.

Der Befestigungsfuß des Halters 21 weist eine Auflageleiste 22 auf, die sich an den freien Längsrändern der Nutstege 23 abstützt. Von dieser Auflageleiste erstreckt sich ein in die Verankerungsnut eingreifender Klemmsteg 24.

Während bei den Ausführungsbeispielen nach den Fig. 2 und 3 die Nutstege 8 und 9 Teile eines Aufsatzprofils 7 sind, sind bei den übrigen dargestellten Ausführungsformen die die Verankerungsnuten begrenzenden Nutstege mit dem Fassadenprofil einstückig.

Das Fassadenprofil 25 ist mit Nutstegen 23 ausgerüstet, durch die drei Verankerungsnuten 26 gebildet werden.

Bei diesem Nutbild, das in den Fig. 4 und 5 aufgezeigt ist, besteht die Möglichkeit, entweder ein Heizrohr 12 in der mittleren Verankerungsnut oder zwei parallel zueinander verlaufende Heizrohre in den äußeren Verankerungsnuten festzulegen.

In den Fig. 6 und 7 ist ein Fassadenprofil 27 aufgezeigt, das mit einem Nutbild ausgestattet ist, das dem des Aufsatzprofils 7 nach den Fig. 2 und 3 entspricht.

Die Nutstege 8 und 9 bilden zwei parallel zueinander verlaufende Verankerungsnuten 10, in denen entsprechend der Fig. 6 zwei Heizrohre 12 oder entsprechend der Fig. 7 ein Heizrohr 12 festgelegt werden kann.

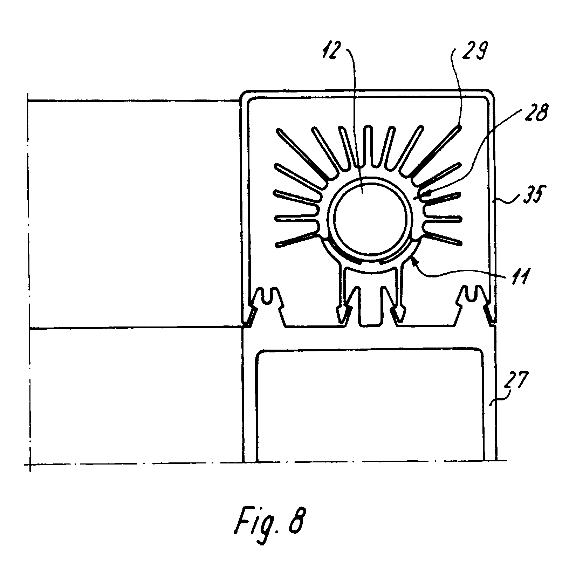

Bei dem Ausführungsbeispiel nach der Fig. 8 ist das Fassadenprofil 27 mit einem Heizrohr 12 ausgerüstet, auf ds ein Wärmetauschprofil 28 aufgeklipst ist. Dieses Wärmetauschprofil weist strahlenförmig sich nach außen erstreckende Rippen 29 auf, die eine Oberflächenvergrößerung ergeben und damit die Wärmeabstrahlung verbessern.

Das in der Fig. 8 aufgezeigte und auf das Heizrohr 12 aufgeklipste Wärmetauschprofil 28 umgreift das Heizrohr 12 über einen Winkelbereich, der wenig größer als 180° ist. Die Länge des Wärmetauschprofils 28 entspricht dem Abstand zweier benachbarter Halter 11.

Vorzugsweise soll das Heizungssystem als träges Niedertemperatursystem genutzt werden, was insbesondere den Vorteil hat, daß starke Temperaturschwankungen auf die Fassadenkonstruktion nicht einwirken. Die Wärmeübertragung vom Heizmedium auf die Umgebungsluft erfolgt insbesondere über Wärmestrahlung, die gemäß der Ausführung nach der Fig. 8 intensiviert werden kann.

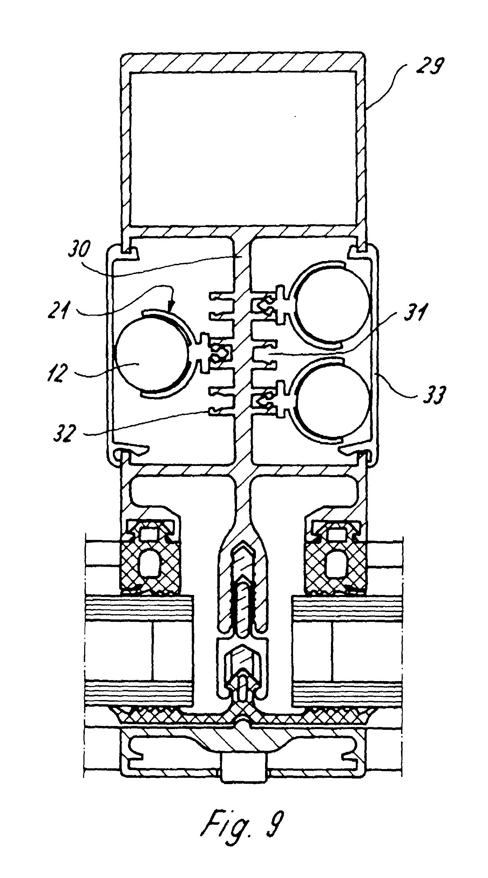

Die Fig. 9 zeigt ein Fassadenprofil 29, das an einem im mittleren Bereich vorgesehenen Steg 30 an beiden Seiten Verankerungsnuten 31 aufweist, die durch Nutstege 32 begrenzt werden. Durch Halter 21 werden die ein Heizmedium führenden Rohre 12 an dem Fassadenprofil festgelegt.

Die Heizrohre werden durch ein Abdeckprofil 33 gegenüber dem zu temperierenden Raum verkapselt.

Auch bei den übrigen erörterten Ausführungsformen sind Kappen 34,35 vorgesehen, durch die die ein Heizmedium führenden Rohre gegenüber dem aufzuheizenden Raum abgedeckt werden. Diese Kappen werden aus einem gut wärmeleitenden Material gefertigt.

### Bezugszeichen

- 1 2: Fassadenprofil
- 3: Abdeckprofil
- 4: Schraube
- 5: Isolierglasscheibe
- 6: Seite
- 7: Aufsatzprofil
- 8: Nutsteg
- 9: Nutsteg
- 10: Verankerungsnut
- 11: Halter
- 12: Rohr
- 13: Klemmschenkel
- 14: Klemmschenkel
- 15: Stützleiste
- 16: Endstück
- 17: Spaltraum
- 18: Klemmsteg
- 19: Endstück
- 20: Wärmedämmschicht
- 21: Halter
- 22: Auflageleiste
- 23: Nutsteg
- 24: Klemmsteg
- 25: Fassadenprofil
- 26: Verankerungsnut
- 27: Fassadenprofil
- 28: Wärmetauschprofil
- 29: Rippe
- 30: Steg
- 31: Verankerungsnut
- 32: Nutsteg
- 33: Abdeckprofil
- 34: Kappe
- 35: Kappe

## Patentansprüche

1. Fassade zur Außenbegrenzung von Räumen eines Gebäudes, welche Fassade aus einem von Pfosten- und Riegelprofilen (2, 25, 27) gebildeten Rahmenwerk und aus die Rahmenfelder ausfüllenden Rahmenelementen (5), sowie aus einer Vorrichtung zum Temperieren der genannten Räume besteht, wobei die Vorrichtung zum Temperieren nach der Erstellung der Fassade durch den Metallbauer vom Heizungsbauer nachrüstbar ist und die Vorrichtung an mindestens einer dem zu temperierenden Raum zugewandten Fläche der Pfosten- oder Riegelprofile vorgesehen ist, die Fläche Teil der Pfosten- oder Riegelprofile oder eines Aufsatzprofils ist und die Fläche mit eine oder mehrere Verankerungsnuten begrenzenden Nutstegen (8, 9, 23, 32) ausgerüstet ist und die Vorrichtung sich aus mindestens einem ein Heizmedium führenden Rohr (12), aus das bzw. die Rohre aufnehmenden Haltern (11, 21) und aus die Rohre (12) und die Halter abdeckenden Kappen (34, 35) zusammensetzt, wobei die Halter (11, 21) aus Klemmschenkeln (13, 14) zur Festlegung der Rohre (12) und aus einem Befestigungsfuß bestehen, der an Rastmitteln der Fassadenprofile (2, 25, 27) oder an Rastmitteln der Aufsatzprofile (7) befestigbar ist und die Kappen (34, 35) Rastmittel zur Festlegung an dem Fassadenprofil (2, 25, 27) oder an dem Aufsatzprofil (7) aufweisen, wobei die Befestigungsfüße der Halter (11, 21) und die Rastmittel der Kappen (34, 35) an den Nutstegen festlegbar sind.

2. Fassade mit einer Vorrichtung zum Temperieren nach Anspruch 1, dadurch gekennzeichnet, daß zwischen den Aufsatzprofilen (7) und den Fassadenprofilen eine Wärmedämmschicht (20) vorgesehen ist und daß das Aufsatzprofil (7) und die Wärmedämmschicht (20) mit dem Fassadenprofil (2) verschraubt sind.

3. Fassade mit einer Vorrichtung zum Temperieren nach Anspruch 1, dadurch gekennzeichnet, daß die Klemmschenkel (13,14) der Außenkontur des Rohres (12) angepaßt sind, sich über einen Winkelbereich, der größer als 180° ist, erstrecken und sich zumindest an den freien Enden am Rohr (12) abstützen.

4. Fassade mit einer Vorrichtung zum Temperieren nach Anspruch 3, dadurch gekennzeichnet, daß im Sohlenbereich der Klemmschenkel eine Stützleiste (15) für das Rohr (12) und an den Schenkelenden an dem Rohr (12) anliegende Endstücke (16) vorgesehen sind.

5. Fassade mit einer Vorrichtung zum Temperieren nach Anspruch 1, dadurch gekennzeichnet, daß der Befestigungsfuß eine sich an den freien Längsrändern der Nutstege abstützende Auflageleiste (22) und einen von der Auflageleiste ausgehenden, in die Verankerungsnut eingreifenden Klemmsteg (24) aufweist.

6. Fassade mit einer Vorrichtung zum Temperieren nach Anspruch 1, dadurch gekennzeichnet, daß der Befestigungsfuß der Halter (11) aus zwei in Abstand angeordneten, parallel sich erstreckenden Klemmstegen (18) besteht.

7. Fassade mit einer Vorrichtung zum Temperieren nach Anspruch 6, dadurch gekennzeichnet, daß die Klemmstege (18) am freien Ende ein ein pfeilförmiges Endstück (19) aufweisen.

8. Fassade mit einer Vorrichtung zum Temperieren nach einem der vorhergehenden Ansprüche, dadurch gekennzeichnet, daß auf die Heizrohre (12) ein Wärmetauschprofil (28) gesetzt ist.

9. Fassade mit einer Vorrichtung zum Temperieren nach Anspruch 8, dadurch gekennzeichnet, daß das Wärmetauschprofil (28) auf das Heizrohr (12) geklipst ist.

10. Fassade mit einer Vorrichtung zum Temperieren nach Anspruch 8 oder 9, dadurch gekennzeichnet, daß das Wärmetauschprofil (28) strahlenförmig sich nach außen erstreckende Rippen (29) aufweist.

## Claims

1. A facade for external delimitation of rooms in a building, which facade comprises a framework formed by upright and horizontal members (2, 25, 27) and frame elements (5) filling the frame openings, and a device for temperature control of said rooms, wherein the temperature control device can be subsequently fitted by the heating engineer after erection of the facade by the metalworker and the device is provided on at least one surface of the upright or horizontal members, that faces towards the room whose temperature is to be controlled, the surface is part of the upright or horizontal members or an attachment profile member and the surface is provided with groove flanges (8, 9, 23, 32) defining one or more anchoring grooves and the device is composed of at least one pipe (12) for carrying a heating medium, holders (11, 21) for receiving the pipe or pipes, and caps (34, 35) which cover over the pipes (12) and the holders, wherein the holders (11, 21) comprise clamping limbs (13, 14) for fastening the pipes (12) and a fixing foot which can be fixed to latching means of the facade profile members (2, 25, 27) or to latching means of attachment profile members (7) and the caps (34, 35) have latching means for fixing to the facade profile member (2, 25, 27) or to the attachment profile member (7), wherein the fixing feet of the holders (11, 21) and the latching means of the caps (34, 35) can be fastened to the groove flanges.

2. A facade with a temperature control device according to claim 1 characterised in that a heat insulating layer (20) is provided between the attachment profile members (7) and the facade profile members and that the attachment profile member (7) and the heat insulating layer (20) are screwed to the facade profile member (2).

3. A facade with a temperature control device according to claim 1 characterised in that the clamping limbs (13, 14) are matched to the outside contour of the pipe (12), and extend over an angular region which is greater than 180° and bear at least at the free ends against the pipe (12).

4. A facade with a temperature control device according to claim 3 characterised in that a support strip portion (15) for the pipe (12) is provided in the bottom region of the clamping limbs and end portions (16) which bear against the pipe (12) are provided at the limb ends.

5. A facade with a temperature control device according to claim 1 characterised in that the fixing foot has a support strip portion (22) which bears against the free longitudinal edges of the groove flanges and has a clamping flange (24) which extends from the support strip portion and which engages into the anchoring groove.

6. A facade with a temperature control device according to claim 1 characterised in that the fixing foot of the holders (11) comprises two clamping flanges (18) which are arranged at a spacing and which extend in parallel relationship.

7. A facade with a temperature control device according to claim 6 characterised in that the clamping flanges (18) have an arrow-shaped end portion (19) at the free end.

8. A facade with a temperature control device according to one of the preceding claims characterised in that a heat exchange profile member (28) is fitted on to the heating pipes (12).

9. A facade with a temperature control device according to claim 8 characterised in that the heat exchange profile member (28) is clipped on to the heating pipe (12).

10. A facade with a temperature control device according to claim 8 or claim 9 characterised in that the heat exchange profile member (28) has ribs (29) extending outwardly in a radiating configuration.

## Revendications

1. Façade pour la délimitation extérieure de pièces d'un bâtiment, laquelle façade est constituée d'une ossature de bâti formée par des profilés de montants et de traverses (2, 25, 27), et d'éléments de bâti (5) remplissant les panneaux du bâti, ainsi que d'un dispositif pour équilibrer la température des pièces en question, le dispositif d'équilibrage de température pouvant être ajouté par le chauffagiste ultérieurement à la construction de la façade par le constructeur d'ossatures métalliques, et ce dispositif étant prévu sur au moins une surface des profilés de montants ou de traverses tournée vers la pièce à tempérer, cette surface faisant partie des profilés de montants ou de traverses ou d'un profilé rapporté, et ladite surface étant dotée de nervures rainurées (8, 9, 23, 32) délimitant une ou plusieurs rainures d'ancrage, et ce dispositif se composant d'au moins un tuyau (12) transportant un fluide de chauffage, de supports (11, 21) recevant le ou les tuyaux et de capots (34, 35) recouvrant les supports (11, 21), les supports (11, 21) étant constitués de branches de serrage (13, 14) pour fixer en position les tuyaux (12) et d'un pied de fixation qui peut être fixé dans des moyens de crantage des profilés de façade (2, 25, 27) ou dans des moyens de crantage des profilés rapportés (7), et les capots (34, 35) présentant des moyens de crantage pour leur fixation en position sur le profilé de façade (2, 25, 27) ou sur le profilé rapporté (7), les pieds de fixation des supports (11, 21) et les moyens de crantage des capots (34, 35) pouvant être fixés en position dans les nervures rainurées.

2. Façade avec un dispositif d'équilibrage de température selon la revendication 1, caractérisée en ce qu'une couche d'isolation thermique (20) est prévue entre les profilés rapportés (7) et les profilés de façade, et en ce que le profilé rapporté (7) et la couche d'isolation thermique (20) sont assemblés par vissage au profilé de façade (2).

3. Façade avec un dispositif d'équilibrage de température selon la revendication 1, caractérisée en ce que les branches de serrage (13, 14) sont adaptées au contour extérieur du tuyau (12), s'étendent sur une plage angulaire qui est supérieure à 180° et s'appuient au moins à leurs extrémités libres contre le tuyau (12).

4. Façade avec un dispositif d'équilibrage de température selon la revendication 3, caractérisée en ce qu'une barrette de soutien (15) pour le tuyau (12) est prévue dans la région de la base des branches de serrage, et des embouts (16) s'appliquant contre le tuyau (12) sont prévus aux extrémités des branches.

5. Façade avec un dispositif d'équilibrage de température selon la revendication 1, caractérisée en ce que le pied de fixation présente une barrette d'appui (22) s'appuyant contre les bords longitudinaux libres des nervures rainurées, et une nervure de serrage (24) partant de la barrette d'appui et s'engageant dans la rainure d'ancrage.

6. Façade avec un dispositif d'équilibrage de température selon la revendication 1, caractérisée en ce que le pied de fixation des supports (11) est constitué de deux nervures de serrage (18) s'étendant parallèlement à distance entre elles.

7. Façade avec un dispositif d'équilibrage de température selon la revendication 6, caractérisée en ce que les nervures de serrage (18) présentent à leur extrémité libre un embout (19) en forme de flèche.

8. Façade avec un dispositif d'équilibrage de température selon l'une quelconque des revendications précédentes, caractérisée en ce qu'un profilé d'échange de chaleur (28) est posé sur les tuyaux de chauffage (12).

9. Façade avec un dispositif d'équilibrage de température selon la revendication 8, caractérisée en ce que le profilé d'échange de chaleur (28) est clipsé sur le tuyau de chauffage (12).

10. Façade avec un dispositif d'équilibrage de température selon la revendication 8 ou 9, caractérisée en ce que le profilé d'échange de chaleur (28) présente des nervures (29) s'étendant vers l'extérieur en forme de rayons.
